# EUROPEAN PATENT APPLICATION

(11) **EP 4 700 874 A1**
(43) Date of publication of application: **25.02.2026**
(21) Application number: 25189498.6
(22) Date of filing: 15.07.2025
(51) Int. Cl.: H01M 8/04537, H01M 8/04858, H01M 10/42, H01M 10/48, H01M 16/00, H02J 7/34, H02J 3/32, H02J 3/38

(54) **A FLEET OF FUEL CELL-BASED GENERATION SYSTEMS AND A CONTROL METHOD THEREOF**

(30) Priority: 09.08.2024 WO PCT/EP2024/072551; 27.09.2024 WO PCT/EP2024/077283
(71) Applicant: Hitachi Energy Ltd, 8050 Zürich (CH)
(72) Inventor: Testori, Marcello, 20097 San Donato Milanese (MI) (IT)
(74) Representative: Zacco Sweden AB

(57) **Abstract**

A fuel cell-based generation system (100, 100', 100") is provided. The fuel cell-based generation system (100, 100', 100") includes a fuel cell subsystem (10) comprising at least one fuel cell (11) coupled to a power terminal (101) which is configurable to connect with a power network; a battery subsystem (20) comprising at least one battery (21) coupled to the power terminal (101) and configured to provide a state of charge (SoC) value of the at least one battery (21), the at least one battery (21) being capable of discharging to the power network and charging from the at least one fuel cell (11); and a controller (60) configured to operate the fuel cell-based generation system (100, 100', 100") by coordinated control of the battery subsystem (20) and the fuel cell subsystem (10) with a power setpoint for the fuel cell subsystem (10), wherein the power setpoint for the fuel cell subsystem (10) is based on a reference power setpoint provided to the fuel cell-based generation system (100, 100', 100").

## Description

### TECHNICAL FILED

The present disclosure relates to a fuel cell-based generation system and a fleet of fuel cell-based generation systems. The present disclosure also relates to a method for controlling a fleet of fuel cell-based generation systems.

### BACKGROUND

A fuel cell is a chemical device that converts chemical energy into electrical energy. It mainly converts the Gibbs free energy part of the chemical energy into electrical energy through electrochemical reactions, which is not limited by the Carnot cycle effect and therefore has high efficiency. Taking the hydrogen-oxygen fuel cell as an example, its reaction principle is the reverse process of electrolyzing water. Hydrogen gas undergoes oxidation at the anode, producing hydrogen ions and electrons, and the electrons travel through the external circuit to reach the cathode. The hydrogen ions also reach the cathode through the proton exchange membrane and react with electrons and oxygen at the cathode to generate water.

Fuel cells have the advantage of high-power generation efficiency. Fuel cells can theoretically operate at near 100% thermal efficiency. In actual operation, the conversion efficiency is mostly within the range of 45% to 60%. If considering the use of heat dissipation, the overall efficiency can reach more than 80%. Fuel cells also have the advantage of low environmental pollution, with very few harmful gases emitted and the main product being water, making them environmentally friendly.

However, when a fuel cell-based system is used to power a load or discharge to a power network and the demand power of the load or the power network may change rapidly, the response speed of the fuel cell may not be fast enough. This is because the fuel cell generates electrical energy through electrochemical reactions, which take time to complete. Moreover, the fuel cell-based system usually comprises multiple parts such as a fuel cell stack, a gas supply system (including air compressors), a thermal management system, and a control system. The collaborative work between these parts also takes time. Such a fuel cell-based system requires time to readjust the operation state of each part. If there is a rapid change in demand power but the response speed of the fuel cell-based system is not fast enough, this may lead to instability in output voltage and could cause other issues, such as power fluctuations or even system failure.

### SUMMARY

According to an embodiment of the present disclosure, a fuel cell-based generation system is provided. The fuel cell-based generation system includes a fuel cell subsystem comprising at least one fuel cell coupled to a power terminal which is configurable to connect with a power network; a battery subsystem comprising at least one battery coupled to the power terminal and configured to provide a state of charge (SoC) value of the at least one battery, the at least one battery being capable of discharging to the power network and charging from the at least one fuel cell; and a controller configured to operate the fuel cell-based generation system by coordinated control of the battery subsystem and the fuel cell subsystem with a power setpoint for the fuel cell subsystem, wherein the power setpoint for the fuel cell subsystem is based on a reference power setpoint provided to the fuel cell-based generation system.

According to another embodiment of the present disclosure, a fleet of fuel cell-based generation systems connected to a power network is provided. The fleet includes a plurality of fuel cell-based generation systems. At least one fuel cell-based generation system includes a fuel cell subsystem, a battery subsystem, and a controller. The fuel cell subsystem includes at least one fuel cell coupled to a power terminal which is configurable to connect with the power network. The battery subsystem includes at least one battery coupled to the power terminal and configured to provide a state of charge (SoC) value of the at least one battery, the at least one battery being capable of discharging to the power network and charging from the at least one fuel cell. The controller of the at least one fuel cell-based generation system is configured to operate the fuel cell-based generation system by coordinated control of the battery subsystem and the fuel cell subsystem of the at least one fuel cell-based generation system with a power setpoint for the fuel cell subsystem, which is based on a reference power setpoint from a fleet controller.

According to yet another embodiment of the present disclosure, a method for controlling a fleet of fuel cell-based generation systems connected to a power network is provided. Each fuel cell-based generation system includes a fuel cell subsystem, a battery subsystem, and a controller. The fuel cell subsystem includes at least one fuel cell coupled to a power terminal which is configurable to connect with the power network. The battery subsystem includes at least one battery coupled to the power terminal and configured to provide a state of charge (SoC) value of the at least one battery, the at least one battery being capable of discharging to the power network and charging from the at least one fuel cell. The method includes the steps of receiving information, by a fleet controller, on load demand for the power network; determining, by the fleet controller, a reference power setpoint for each of one or more fuel cell-based generation systems from the fleet of fuel cell-based generation systems to meet load demand of the power network; and providing, by the fleet controller, the reference power setpoint to a corresponding fuel cell-based generation system, such that the corresponding fuel cell-based generation system is operated based on the reference power setpoint.

### BRIEF DESCRIPTION OF THE DRAWINGS

The disclosed aspects will hereinafter be described in connection with the appended drawings, which are provided to illustrate but not to limit the scope of the present disclosure.
Figure 1 is a block diagram illustrating a fuel cell-based generation system according to an embodiment of the present disclosure.
Figure 2A is a block diagram illustrating an implementation of the controller of the fuel cell-based generation system shown in Figure 1.
Figure 2B illustrates multiple SoC ranges according to examples of the present disclosure.
Figure 3 is a block diagram illustrating a modified example of the fuel cell-based generation system shown in Figure 1.
Figure 4 is a block diagram illustrating another modified example of the fuel cell-based generation system shown in Figure 1.
Figure 5 is a flowchart diagram of a method for controlling a fuel cell-based generation system according to an embodiment of the present disclosure.
Figures 6A-6D show sub-steps of the main steps of the method illustrated in Figure 11.
Figure 7 is a block diagram illustrating a fleet of fuel cell-based generation systems coupled to a power network according to an embodiment of the present disclosure.
Figures 8-11 are block diagrams illustrating the fleet of fuel cell-based generation systems according to other embodiments of the present disclosure.
Figure 12 is a flowchart diagram of a method for controlling a fleet of fuel cell-based generation systems coupled to a power network according to other embodiments of the present disclosure.

### DETAILED DESCRIPTION

Examples of the present disclosure relate to a fleet of fuel cell-based generation systems provided for a power network (e.g., a microgrid or a bus coupling several power sources and at least one load) and to a method for controlling such a fleet of fuel cell-based generation systems. The power network can be an electrical network used in a charging station for charging electric vehicles, data centers, building establishments, or in industries such as the mining industry, construction industry, steel plants, or electrical networks for transportation like trains and electric buses. Such exemplary use applications are henceforth referred as an industrial application system.

Examples of the present disclosure also relate to a fuel cell-based generation system and a method for controlling the fuel cell-based generation system. The fuel cell-based generation system comprises a combination of a fuel cell (FC) and a battery (BAT), for example, a lithium-ion battery, and is thus referred to as a FC-BAT generation system. In this system, the fuel cell serves as the main energy source, while the battery provides power during fuel cell startup or when there are sudden changes in load power demand. This combination leverages not only the fuel cell's advantages of high efficiency and environmental protection but also the battery's high-power density and fast response characteristics, thereby enhancing the reliability and performance of the entire system.

The control method according to examples of the present disclosure involves determining and adjusting the power setpoint of the fuel cell, thereby enhancing overall performance of the system, extending the service life of both the fuel cell and battery, and ensuring stable and reliable power supply across various operating conditions through precise control of the fuel cell power setpoint.

For example, while ensuring that the load demand power is met, this control method considers the SOC value of the battery to avoid overcharging the battery (which may lead to battery damage or safety hazards) or deep discharge (which may affect battery life and performance) through the power setpoint of the fuel cell. Furthermore, it considers the operating efficiency and stability of the fuel cell, which is achieved by limiting the value of the power setpoint and change the rate of the power setpoint of the fuel cell.

The fuel cell-based generation system is capable of being operated in a standalone mode or in a fleet mode when connected as a part of a fleet of fuel cell-based generation systems. In the standalone mode, the fuel cell-based generation system is operated entirely by a controller, which can be seen as a generator-level controller, associated with the fuel cell-based generation system. In the fleet mode, the operation of the fuel cell-based generation system is coordinated with other fuel cell-based generation systems in the fleet with the help of a fleet controller. That is to say, in the fleet mode, the operation of an individual fuel cell-based generation system of the fleet is implemented by means of the coordinative control of the controller of the fuel cell-based generation system (generator-level controller) and the fleet controller.

The invention is first described for the standalone mode and then for the fleet mode.

### Standalone mode

Embodiments for the standalone mode are described below.

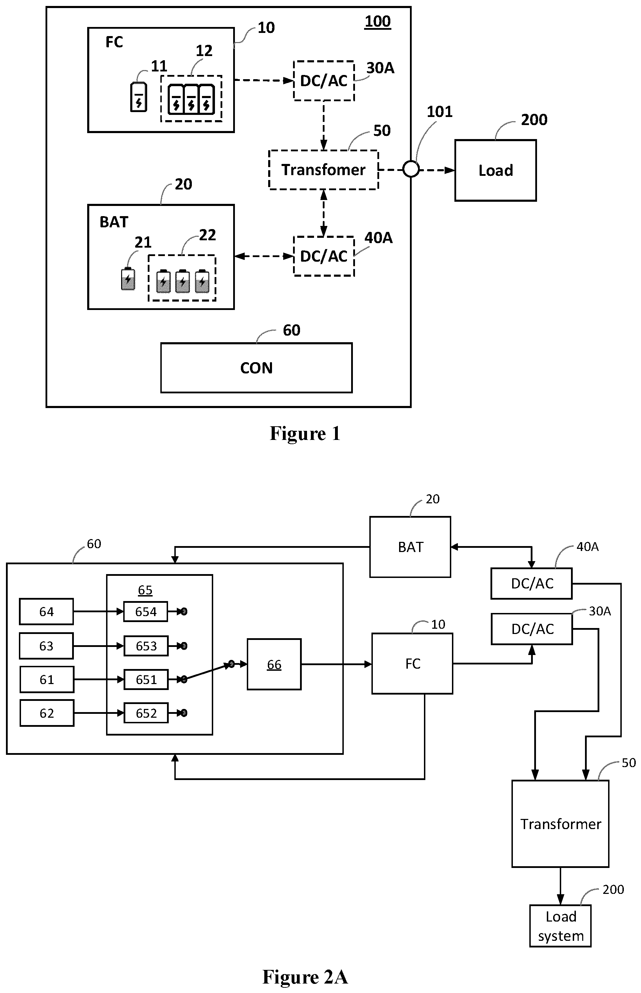

Figure 1 shows a fuel cell-based power generation system 100 (hereinafter referred to as system 100) according to an embodiment of the present disclosure. The system 100 has a power terminal 101 and can be coupled to a load system 200 to supply power to the load system 200 through the power terminal 101. The load system 200 may include one or more DC loads, one or more AC loads, or a combination of DC and AC loads. In other words, the system 100 can supply power to DC loads, AC loads, or a hybrid of DC and AC loads.

With reference to Figure 1, the system 100 comprises a fuel cell subsystem 10, a battery subsystem 20, a controller 60, converters 30A and 40A, and a transformer 50. In an example, the system 100 may also include a housing (i.e., a container) where the fuel cell subsystem 10, battery subsystem 20, controller 60, converters 30A and 40A, and transformer 50 are housed. The power terminal 101, located on the housing, serves as an interface for the system 100 to output electric power.

The fuel cell subsystem 10 includes at least one fuel cell 11. The fuel cell subsystem 10 can also increase its power generation capacity by including more fuel cells. For example, the fuel cell subsystem 10 can also include an additional fuel cell unit 12, which includes one or more fuel cells. In addition, the fuel cell subsystem 10 can also include a fuel cell controller (not shown) for controlling the operation of the fuel cell subsystem 10 according to control instructions from a higher-level controller, such as the controller 60. The fuel cell subsystem 10 can also include sensors (not shown) to detect the operating status of fuel cells, such as temperature sensors and flow sensors. The fuel cell subsystem 10 can also include auxiliary equipment (not shown) for assisting the operation of the fuel cell subsystem 10, such as heat exchangers and water pumps.

The battery subsystem 20 includes at least one battery 21. The battery 21 is, for example, a lithium-ion battery. The battery subsystem 20 can operate in one of the following modes: 1) discharging to the load system 200; 2) being charged by the fuel cell subsystem 10; and 3) neither discharging nor being charged. The battery subsystem 20 can increase its discharge capacity or storage capacity by including more batteries. For example, the battery subsystem 20 can include an additional battery unit 22, which includes one or more batteries. In addition, the battery subsystem 20 can also include a battery management system (BMS) for monitoring, managing, and protecting the battery subsystem 20. For example, the BMS collects status parameters such as the voltage, current, state of charge, and temperature of the battery subsystem 20 and calculates the maximum available charging power and the maximum available discharging power of the battery subsystem 20 under the current state (i.e., real time maximum charging power and real time maximum discharging power).

Due to a possible difference in output voltage levels between the fuel cell subsystem 10 and the battery subsystem 20, the DC-AC converter 30A coupled to the fuel cell subsystem 10 and the DC-AC converter 40A coupled to the battery subsystem 20 can be used to convert the output voltages of the fuel cell subsystem 10 and the battery subsystem 20 to the same voltage level, which is required by the load system 200. The DC-AC converter 30A is coupled to an input winding of the transformer 50, while the DC-AC converter 40A is coupled to another input winding of the transformer 50. The output winding of the transformer 50 is coupled to the load system 200 via the power terminal 101. The transformer 50 can play the role of electrical isolation.

In an example, one of the DC-AC converters, either 30A or 40A, may be omitted. That is, the system 100 may be implemented to convert the voltage level output by either the fuel cell subsystem 10 or the battery subsystem 20 to a voltage level equal to the output voltage of the other, using only one DC-AC converter coupled to either the fuel cell subsystem 10 or the battery subsystem 20.

The controller 60 can communicate with the fuel cell subsystem 10 and the battery subsystem 20 to receive real time information from each. For example, the fuel cell controller of the fuel cell subsystem 10 provides information about the real-time status of the fuel cell 11 to the controller 60. This information includes, for example, the maximum and minimum output power that the fuel cell 11 can currently provide (i.e., the maximum and minimum available output power of the fuel cell 11). Similarly, the BMS of the battery subsystem 20 provides information about the real-time status of the battery 21 to the controller 60. This information includes, for example, the real time SoC value, real time maximum charging power (i.e., maximum available charging power), and real time maximum discharging power (i.e., maximum available discharging power) of the battery 21. The controller 60 can also communicate with the load system 200 to receive real time information from the load system 200. This information includes, for example, the demand power of the load system 200 and changes in the demand power.

The controller 60 dynamically adjusts the power setpoint of the fuel cell subsystem 10, which represents the target output power of the fuel cell subsystem 10, based on information received from both the fuel cell subsystem 10 and the battery subsystem 20, as well as information received from the load system 200. Such coordinated control ensures that the demand power of the load system 200 is met while preventing deep discharging or overcharging of the batteries in the battery subsystem 20, enabling the overall system 100 to operate in a stable state.

The controller 60 can be implemented through hardware, software, or a combination of both, including code stored in a non-transitory computer-readable medium and executed as instructions by a processor. When it comes to hardware implementation, it may be embodied in an application-specific integrated circuit (ASIC), a digital signal processor (DSP), a digital signal processing device (DSPD), a programmable logic device (PLD), a field-programmable gate array (FPGA), a processor, a controller, a microcontroller, a microprocessor, an electronic unit, or any combination of these. As for software implementation, it may encompass microcode, program code, or code segments. The software can be stored in a machine-readable storage medium, such as a memory.

Next, the working principle of the system 100 will be explained using an example of how the controller 60 cooperatively controls the fuel cell 11 and the battery 21.

In the system 100, the fuel cell 11 serves as the primary energy source, while the battery 21 functions as a backup energy source. Specifically, during the start-up phase of the fuel cell 11, the battery 21 supplies electrical power to enable the electrical devices of the fuel cell 11 to activate and enter a working state. When the SoC value of the battery 21 falls within a predetermined range, indicating that it is neither overly charged nor depleted, the battery 21 remains idle, and the controller 60 sets the power setpoint of the fuel cell 11 (i.e., FC power setpoint) to match the demand power of the load system 200.

During operation of the system 100, there may be a situation where the demand power of the load system 200 increases. In this case, due to the relatively slow power change of the fuel cell 11, the battery 21 will discharge to the load system 200 to quickly meet the increase in demand power of the load system 200. During the discharge process, there may be a situation where the SoC of battery 21 becomes lower than the lower limit of the predetermined SoC range. In this case, the controller 60 will increase the power setpoint of the fuel cell 11, so that part of the power generated by the fuel cell 11 is used to charge battery 21, while the other part is used to provide power to the load system 200. After system 100 has operated for a period of time in this way, the SoC of the battery 21 will return to the predetermined SoC range.

During operation of the system 100, there may be a decrease in the power demand of the load system 200. In this case, due to the relatively slow power response of the fuel cell 11, the battery 21 will absorb the excess power generated by the fuel cell 11, meaning that the fuel cell 11 charges the battery 21 to accommodate the decrease in the power demand of the load system 200. During this process, there may be a situation where the SoC of the battery 21 exceeds the upper limit of the predetermined SoC range. In this case, the controller 60 will reduce the power setpoint of the fuel cell 11 and allow the battery 21 to discharge to the load system 200, such that part of the power demand of the load system 200 is provided by the fuel cell 11 and the other part is provided by the battery 21. After the system 100 operates for a period of time in this way, the SoC of the battery 21 will return to the predetermined SoC range.

It should be understood that, according to the control strategy of examples of the present disclosure, the most suitable coordinated control can be provided for various SoC change scenarios, so that the demand power of the load system 200 is met, and there is no deep discharge or overcharge of the battery 21, thus allowing the system 100 to operate in a stable state. Examples of the coordinated control will be introduced below.

Figure 2A shows an exemplary implementation of the controller 60. As shown in Figure 2A, the controller 60 includes multiple determination units, such as first to fourth determination units 61-64, a multiplexer 65, and a setpoint limiter 66.

In this example, each module (i.e., each determination unit, the multiplexer, or the setpoint limiter) of the controller 60 can be implemented through hardware, software, or a combination of both, including code stored in a non-transitory computer-readable medium and executed as instructions by a processor. When it comes to hardware implementation, it may be embodied in an application-specific integrated circuit (ASIC), a digital signal processor (DSP), a digital signal processing device (DSPD), a programmable logic device (PLD), a field-programmable gate array (FPGA), a processor, a controller, a microcontroller, a microprocessor, an electronic unit, or any combination of these. As for software implementation, it may encompass microcode, program code, or code segments. The software can be stored in a machine-readable storage medium, such as a memory.

Each of the multiple determination units 61-64 is used to determine the FC power setpoint in the case where the SoC value of the battery 21 is within one of multiple SoC ranges. The multiplexer 65 includes multiple channels (e.g., first to fourth channels 651-654) corresponding to the multiple SoC ranges. Each channel has an input and an output. The input is connected to one of the multiple determination units 61-64 to receive the FC power setpoint determined by the determination unit. The output of each channel can be gated to transmit the FC power setpoint to the setpoint limiter 66. The setpoint limiter 66 employs a saturation limiter and a ramp limiter to constrain the FC power setpoint, ensuring safe, efficient, and stable operation of the fuel cell. Additionally, it safeguards the stability of the system 100 and any super system it is interconnected with. Subsequently, the setpoint limiter 66 transmits the FC power setpoint that meets each limit threshold to the fuel cell 11 as the target output power of the fuel cell 11.

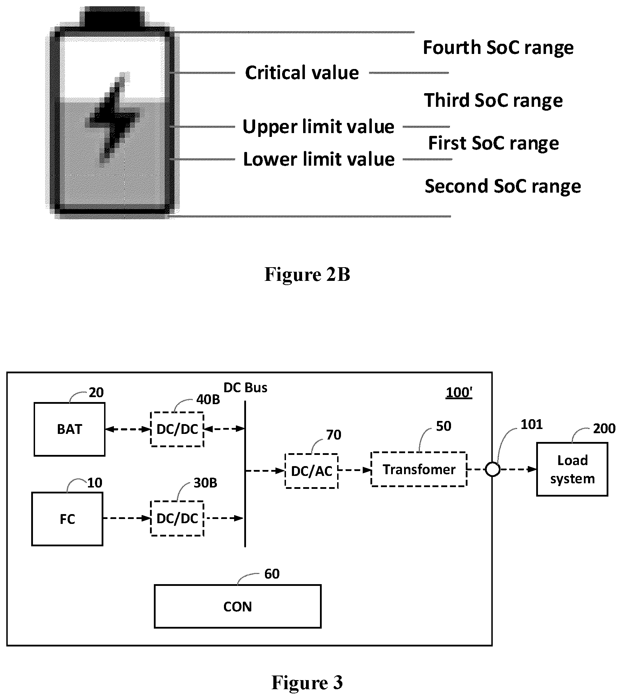

In an example, the multiple SoC ranges include four SoC ranges. Below, each of the four SoC ranges is described with reference to Figure 2B.

With reference to Figure 2B, the first SoC range is the predetermined SoC range mentioned above, which has an upper limit value and a lower limit value. When the SoC value of the battery 21 is within this range, the power setpoint of the fuel cell 22 is determined by the first determination unit 61.

The second SoC range, also known as a low SoC range, is a range in which SoC values are less than the lower limit value. When the SoC value of the battery 21 is within this range, the power setpoint of the fuel cell 22 is determined by the second determination unit 62.

The third SoC range, also known as a first high SoC range, is a range in which SoC values are greater than the upper limit value but less than a critical value, which is higher than the upper limit value. When the SoC value of the battery 21 is within this range, the power setpoint of the fuel cell 22 is determined by the third determination unit 63.

The fourth SoC range, also known as a second high SoC range, is a range in which SoC values are greater than the critical value. The critical value is a very high SoC value such that the battery 21 discharges to the load system 200 with large discharge power, thereby causing the output power of the fuel cell 11 to be lower than the minimum generation threshold of the fuel cell 11. When the output power of the fuel cell 11 is lower than the minimum generation threshold, the fuel cell 11 will turn off or enter a standby state. Thus, when the SoC value of the battery 21 is within this range, the fourth determination unit 64 determines the power setpoint of the fuel cell 11 to be zero, and the fuel cell 11 turns off or enters a standby state.

The system 100 in Figure 1 has various variations in topology, and some of these variations are described below.

Figure 3 shows a modified example of the system 100 in Figure 1.

The system 100' in Figure 3 has most of the same features as the system 100 in Figure 1, except that the fuel cell subsystem 10 is coupled to a DC bus through a DC-DC converter 30B, the battery subsystem 20 is coupled to the DC bus through another DC-DC converter 40B, and these two DC-DC converters 30B and 40B are coupled to the transformer 50 through a DC-AC converter 70. In this configuration, the output voltage levels of both the fuel cell subsystem 10 and the battery subsystem 20 are first converted to the same voltage level by the DC-DC converters 30B and 40B, and then they are converted to a voltage level suitable for the load system 200 by the DC-AC converter 70.

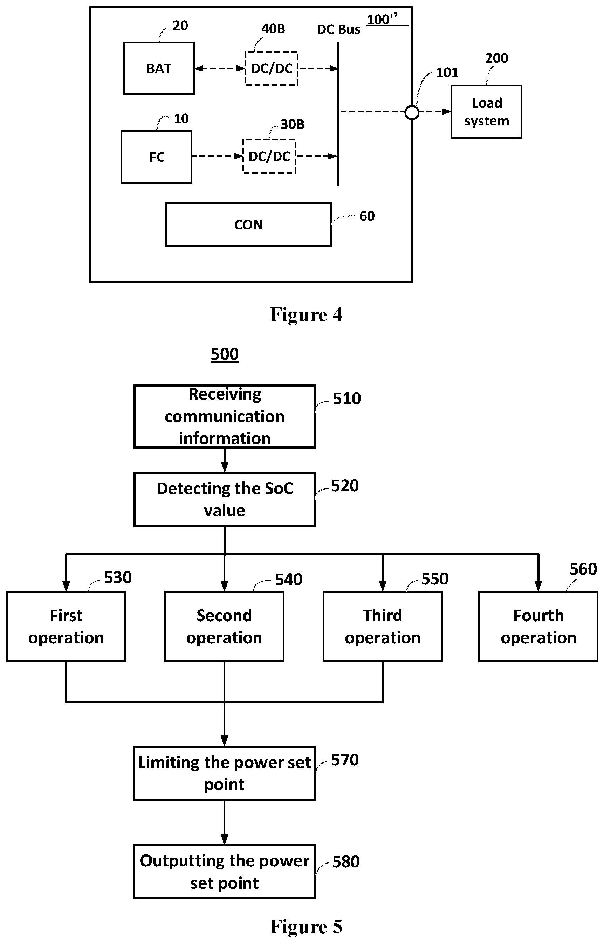

Figure 4 shows another modified example of the system 100 in Figure 1.

The system 100 in Figure 1 and the system 100' in Figure 3 are both suitable for powering AC loads. Here, the system 100" in Figure 4 is suitable for powering DC loads. The system 100" in Figure 4 has most of the same features as the system 100 in Figure 1, except that the fuel cell subsystem 10 is coupled to a DC bus through a DC-DC converter 30B, the battery subsystem 20 is coupled to the DC bus through another DC-DC converter 40B, and the DC bus is directly coupled to the load system 200 via the power terminal 101. In this way, the output voltage levels of the fuel cell subsystem 10 and the battery subsystem 20 are converted to the same voltage level that is suitable for the load system 200 through the DC-DC converters 30B and 40B.

In some examples, in the case where the output voltage levels of the fuel cell subsystem 10 and the battery subsystem 20 are the same, the DC-DC converters or DC-AC converters coupled to them can be omitted.

In some examples, the fuel cell subsystem 10 and the battery subsystem 20 can be directly connected to the load system 200 a DC bus or an AC bus, omitting the transformer 50.

It is noted that, in various examples of the present disclosure, the fuel cell subsystem 10 can be coupled to the battery subsystem 20 and the power terminal 101 through a power electronics circuit that includes one or more converters and/or a transformer. That is to say, the converters and/or a transformer described above can be referred to as being part of the power electronics circuit.

Figure 5 shows a control method 500 for controlling a fuel cell-based power supply system according to an embodiment of the present disclosure. The method 500 can be executed by the controller 60. Below, the method 500 is introduced by way of an example, where the controller 60 coordinatively controls the fuel cell 11 and the battery 21.

With reference to Figure 5, at block 510, the controller 60 receives real-time information from the fuel cell subsystem 10 and the battery subsystem 20, as well as information from the load system 200.

The real-time information from the fuel cell subsystem 10 can include temperatures, currents, voltages, and other state parameters of the fuel cell 11, as well as the maximum and minimum output power that the fuel cell 11 can currently provide.

The real-time information from the battery subsystem 20 can include the real-time SoC value of the battery 21, the maximum charging power, and the maximum discharging power that the battery 21 can currently provide (i.e., the maximum available charging power and the maximum available discharging power).

The information from the load system 200 can include a load profile. The load profile can be expressed as a curve showing the change in power demand over time. Based on the load profile, the following information can be obtained: 1) the amount of change in the demand power of the load system 200; 2) the frequency of change in the demand power; 3) the time period during which the demand power changes; and 4) the energy required for every load change over a given time period. Furthermore, based on the load profile, the controller 60 can predict the trend of change in the demand power over a time period in the future.

At block 520, the controller 60 detects the SoC value of the battery 21 and determines its relationship to the multiple SoC ranges. Specifically, it checks which one of the multiple SoC ranges includes the current SoC value. For example, the SoC value may be within the predetermined range; less than the lower limit value of the predetermined range; greater than the upper limit value of the predetermined range but less than the critical value; or greater than the critical value.

If the detection result indicates that the SoC value of the battery 21 is within the predetermined SoC range, that is, the SoC value is lower than the upper limit and higher than the lower limit, the method 500 proceeds to block 530.

At block 530, the controller 60 operates the system 100 in a first operation mode. In this mode, the controller 60 adjusts the power setpoint of the fuel cell 11 to be equal to the demand power of the load system 200.

Next, examples of the upper and lower limit values of the predetermined SoC range will be introduced.

The upper and lower limit values of the predetermined SoC range can be preconfigured in the controller 60. For example, the upper and lower limit values are predetermined according to the type of the battery 21 and stored in the controller 60, as different types of batteries have different SoC normal operating ranges. In other words, the predetermined SoC range may vary depending on the type of the battery 21. The controller 60 may also adjust the upper and lower limit values based on one or more of the following factors: 1) the state of health of the battery 21; 2) the ambient condition including a temperature, humidity, pressure of the battery 21; and 3) the load profile of the load system 200.

For example, the state of health of the battery 21 refers to the ability of the battery to store and release electrical energy during its life cycle. Over time, the battery 21 will gradually degrade due to factors such as charge and discharge cycles, self-discharge, temperature fluctuations, etc. The BMS of the battery 21 can assess its health status by monitoring parameters such as voltage, current, internal resistance, and capacity of the battery 21. When communication information from the BMS indicates a decline in the state of health of the battery 21, the controller 60 can reduce the upper and increase lower limit values to extend battery life and avoid safety risks.

For example, the performance and lifetime of the battery 21 are significantly influenced by the ambient temperature. Extremely high or low temperatures can not only decrease its performance and shorten its lifetime, but also pose a safety risk. To address this, the controller 60 continuously monitors the ambient temperature of the battery 21 through a temperature sensor (not shown). Depending on the temperature, the controller 60 adjusts the upper and lower limit values of the predetermined SoC range accordingly. In a high temperature environment, for instance, when the ambient temperature exceeds a predetermined high temperature threshold, the controller 60 automatically reduces both the upper and lower limit values by a certain percentage (e.g., 10% each) to protect the battery 21 from potential damage. Conversely, in a low temperature environment, where the ambient temperature falls below a low temperature threshold, the controller 60 increases both the upper and lower limit values by a certain percentage (e.g., 10% each) to ensure optimal battery performance.

For example, based on the load profile of the load system 200, the power demand of the load system 200 at different time points can be obtained. The power demand may vary due to various factors such as application scenarios, operation time during the day, and user-customized requirements. The controller 60 can predict future power demands by analyzing the load profile and adjust the upper and lower limit values accordingly. An example of the adjustment is when it is predicted that there will be a peak in demand power, the controller 60 increases the upper and lower limit values (for example, by 10% each); when it is predicted that there will be a low power demand, the controller 60 decreases the upper and lower limit values (for example, by 10% each).

In the first operation mode, the controller 60 may perform a battery balancing function (block 531) and a sensitivity limiting function (block 532). Below, these two functions are introduced in detail.

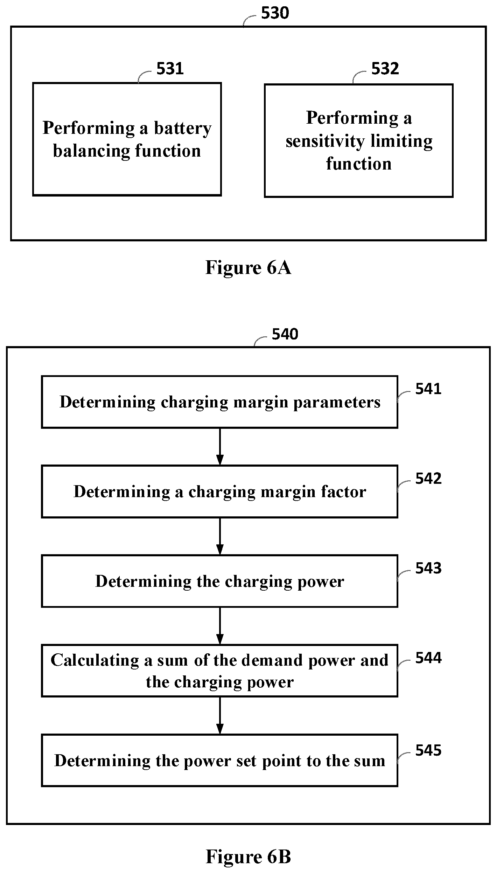

With reference to Figure 6A, at block 531, in the case that the SoC value of the battery 21 is within the predetermined SoC range, the controller 60 can perform the battery balancing function. The controller 60 detects a difference between the maximum charging power value and the maximum discharging power value that the battery 21 can currently provide based on the real-time information from the battery subsystem 20 and determines whether the power difference is greater than a power difference threshold. If it is determined that the power difference is greater than the power difference threshold, the controller 60 adjusts the power setpoint of the fuel cell 11 so that the available power of the battery 21 remains at a central value relative to the maximum charging power and the maximum discharging power. The power difference threshold can be predetermined based on the type of the battery 21 and stored in the controller 60.

This function is particularly useful when the maximum available charging power and maximum available discharging power of the battery 21 lead to a large difference. For example, in low temperature environments, the maximum available charging power of the battery 21 may significantly decrease, but the demand for discharging power may still be high. In this case, this function can adjust the output of the fuel cell 11 by adjusting the power setpoint of the fuel cell 11 to balance this difference and ensure stable operation of the system 100.

In addition, this function can be selectively turned on or turned off. In an example, when the available charging power and discharging power of the battery 21 are much higher than the demand power of the load system 200, this function can be turned off. In another example, when it is known that the power demand of the load system 200 will not change for a long period of time, this function can be turned off during this period of time.

With continued reference to Figure 6A, at block 532, in the case that the SoC value of the battery 21 is within the predetermined SoC range, the controller 60 can perform a sensitivity limit function. This function can reduce the change frequency of the power setpoint by means of setting one or more sensitivity thresholds. For example, in the situation of a sudden change in the power demand for a short time, by applying this function, changing the power setpoint of the fuel cell 11 can be avoided.

In an example, the controller 60 determines whether the power demand of the load system 200 has changed by at least a sensitivity threshold over a predetermined time period, based on real-time information from the load system 200. If it is determined that the power demand of the load system 200 has changed by at least the sensitivity threshold over the predetermined time period, the controller 60 adjusts the power setpoint of the fuel cell 11 to match the new, changed power demand. That is, the new power setpoint equals the updated demand power.

In this example, both the sensitivity threshold and the predetermined time period are used as thresholds to limit the sensitivity of the change in the power setpoint of the fuel cell 11. The sensitivity threshold and the predetermined time period can be preset and stored in the controller 60 based on the stability-related test results of the system 100. In addition, both the sensitivity threshold and the predetermined time period are adjustable. For example, the controller 60 can adjust the sensitivity of the power setpoint change by configuring these values. That is, both the sensitivity threshold and the predetermined time can be set to react differently to changes in demand power, depending on whether the change is small or large, and whether it is short-term or long-term continuous.

It should be understood that the present disclosure does not limit the execution order of block 531 and block 532. That is, both blocks can be executed simultaneously or sequentially.

If the detection result is that the SoC value of the battery 21 is lower than the lower limit value of the predetermined SoC range, the method 500 proceeds to block 540.

At block 540, the controller 60 controls the system 100 in a second operation mode. In the second operation mode, the controller 60 determines the power setpoint of the fuel cell 11 to be higher than the demand power of the load system 200. Consequently, a part of the power generated by the fuel cell 11 is used to provide power to the load system 200, while another part is used to charge the battery 21. Below, an example of the block 540 is described (see blocks 541-545).

With reference to Figure 6B, at block 541, the controller 60 determines charging margin parameters of the battery 21, which include the minimum load charging power and a corresponding minimum charging margin, as well as the maximum load charging power and a corresponding maximum charging margin.

In an example, the charging margin parameters are preconfigured based on the type of battery 21 and stored in the controller 60. This is because different types of batteries have different charging and discharging characteristics and safety requirements, so different charging margin parameters need to be configured. Moreover, considering that relying solely on the charging margin parameters that have been configured based on the battery type may not be sufficient to cope with changing application scenarios, the controller 60 can adjust the preconfigured charging margin parameters based on at least one of the following factors: 1) the state of health of the battery 21; 2) the ambient condition including a temperature, humidity, pressure of the battery 21; and 3) the load profile of the load system 200.

For example, as the battery 21 is used and ages, its capacity and performance will gradually decrease. When the state of health of the battery 21 decreases, in order to prevent damage caused by overcharging or undercharging, the controller 60 can increase the charging margins, that is, both the minimum and maximum charging margins are increased, for the same minimum and maximum load charging power.

For example, considering that the performance and safety of the battery 21 are greatly affected by the ambient temperature, the controller 60 can adjust the minimum and maximum charging margins of the battery 21 to ensure the safety and efficiency of the battery 21 in high or low temperature environments.

For example, based on the changes in the load profile, the controller 60 can adjust the maximum and minimum charging margins to accommodate different power demands, thereby optimizing the efficiency and lifespan of the battery 21.

At block 542, the controller 60 determines a charging margin factor based on the charging margin parameters. The charging margin factor is, for example, a charging slope calculated based on the four charging margin parameters described above, and its value is between 0 and 1. The controller 60 can adjust the charging margin factor by adjusting the charging margin parameters.

At block 543, the controller 60 determines the charging power of the battery 21 based on the maximum charging power that the battery 21 can currently provide and the charging margin factor. For example, the charging power of the battery 21 is obtained by multiplying the maximum available charging power by the charging margin factor. Here, by using the charging margin factor to make the charging power of the battery 21 less than its maximum charging power, it can play a role in ensuring the charging safety of the battery 21.

At block 544, the controller 60 calculates the sum of the demand power of the load system 200 and the charging power of the battery 21.

At block 545, the controller 60 determines the power setpoint of the fuel cell 11 as the sum of the demand power of the load system 200 and the charging power of the battery 21.

If the detection result indicates that the SoC value of the battery 21 is greater than the upper limit value of the predetermined SoC range but less than the critical value, the method 500 proceeds to block 550.

At block 550, the controller 60 controls the system 100 in a third operation mode. In this operation mode, the controller 60 adjusts the power setpoint of the fuel cell 11 to be lower than the demand power of the load system 200, so that the battery 21 discharges to the load system 200. In this way, a part of the demand power of the load system 200 is provided by the fuel cell 11 and another part is provided by the battery 21. Below, an example of the block 550 is described (see blocks 551-555).

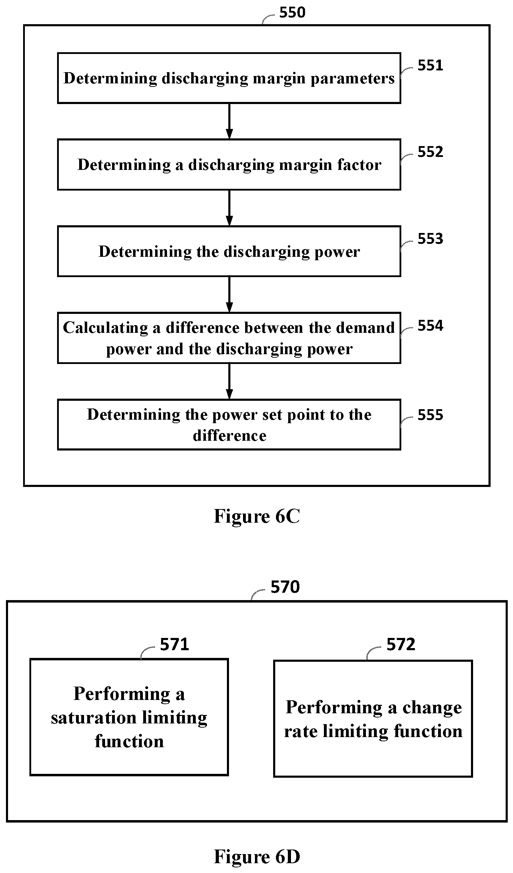

With reference to Figure 6C, at block 551, the controller 60 determines discharging margin parameters of the battery 21, which include the minimum load discharging power and a corresponding minimum discharging margin, as well as the maximum load discharging power and a corresponding maximum discharging margin.

In an example, the discharging margin parameters are preconfigured based on the type of battery 21 and stored in the controller 60. This is because different types of batteries have different charging and discharging characteristics and safety requirements, so different discharging margin parameters need to be configured. Moreover, considering that relying solely on the preconfigured discharging margin parameters, which are based on the battery type, may not be sufficient to cope with discharging application scenarios, the controller 60 can adjust these parameters based on at least one of the following factors: 1) the state of health of the battery 21; 2) the ambient condition including a temperature, humidity, pressure of the battery 21; and 3) the load profile of the load system 200.

For example, as the battery 21 is used and aged, its capacity will gradually decrease and its internal resistance will increase, which will affect its discharge performance. In order to ensure that the battery 21 can still work safely and stably when its state of health declines, the controller 60 can adjust the discharge margin parameters accordingly.

For example, the performance and safety of the battery 21 are greatly affected by the ambient temperature. In high temperature environments, the chemical reactions inside the battery will accelerate, which may lead to safety issues such as overheating, leakage, and even explosion; on the other hand, while in low temperature environments, the discharge capacity of the battery 21 will significantly decrease. Therefore, the controller 60 can adjust the discharge margin parameters according to changes in ambient temperature to ensure the normal operation of the battery 21 at different temperatures.

For example, the load profile reflects the power demand of the load system 200 at different time points. If the power demand of the load system 200 fluctuates greatly or there is a sudden high load demand, the controller 60 can adjust the discharge margin parameters to cope with these changes and maintain a stable power supply. By reserving larger power margins, it can ensure that the battery 21 can still provide stable power supply when the load power demand changes, avoiding system collapse or performance degradation caused by insufficient power.

At block 552, the controller 60 determines a discharge margin factor based on the discharge margin parameters. The discharge margin factor is, for example, a discharge slope calculated based on the four discharge margin parameters described above, and its value is between 0 and 1. The controller 60 can adjust the discharge margin factor by adjusting the discharge margin parameters.

At block 553, the controller 60 determines the discharge power of the battery 21 based on the maximum discharge power that the battery 21 can currently provide and the discharge margin factor. For example, the discharge power of the battery 21 is obtained by multiplying the maximum discharge power by the discharge margin factor. Here, by using the discharge margin factor to limit the discharge power of the battery 21 to be less than its maximum allowable discharge power, it ensures the safety of the battery 21 during the discharge process.

At block 554, the controller 60 calculates a difference between the demand power of load system 200 and the discharge power of battery 21.

At block 555, the controller 60 determines the power setpoint of fuel cell 11 to be the difference between the demand power and the discharge power.

If the detection result indicates that the SoC value of the battery 21 is higher than the critical value, the method 500 proceeds to block 560.

In block 560, the controller 60 operates the system 100 in a fourth operation mode. In this operation mode, the controller 60 sets the power setpoint of the fuel cell 11 to zero. This is because the SoC value of the battery 21 is higher than the critical value, which means that the battery 21 must be discharged even when load power demand is lower than the minimum generation threshold of the fuel cell 11. This will cause the fuel cell 11 to turn off or enter a standby state. It should be understood that the minimum generation threshold of the fuel cell 11 is the lowest power value that the fuel cell can stably and continuously work. This value is usually determined by the design parameters, working environment, and load characteristics of the fuel cell 11. When the generated power of the fuel cell 11 is lower than this value, it cannot maintain a normal electrochemical reaction rate, resulting in performance degradation or damage.

After determining the power setpoint at block 530, 540, or 550, the method 500 proceeds to block 570.

At block 570, the controller 60 limits the power setpoint in two aspects, i.e., saturation limiting and ramp limiting. The two aspects are described in detail below (blocks 571 and 572).

With reference to Figure 6D, at block 571, the controller 60 limits the determined power setpoint by means of an upper saturation value and a lower saturation value.

The upper saturation value and the lower saturation value are used to ensure that the fuel cell 11 does not output power beyond its safe or effective operating range. That is, if the determined power setpoint is higher than the upper saturation value or lower than the lower saturation value, it will be limited by the upper saturation value or the lower saturation value.

The upper saturation value and the lower saturation value can be preset in the controller 60 or determined based on communication information with the fuel cell 11. For example, the fuel cell 11 provides real-time available maximum and minimum output power, which can be used as the upper saturation value and the lower saturation value.

With contoured reference to Figure 6D, at block 572, the controller 60 limits the power setpoint by means of a ramp limit value.

The ramp limit value is used to control the rate of change of the power setpoint delivered to the fuel cell 11. This is because rapidly changing the power output of the fuel cell 11 may negatively affect its performance, lifetime, or stability. That is, if the rate of change of the power setpoint exceeds the ramp limit value, it will be adjusted to comply with the ramp limit value. Additionally, it can avoid the risk of instabilities in the overall control by limiting the ramp rate of the change of the power setpoint.

The ramp limit value can either be preset in the controller 60 or dynamically determined based on communication with the fuel cell 11. For example, the fuel cell 11 provides an absolute maximum rate of power change, which is determined by various factors such as the type (e.g., proton exchange membrane fuel cell, molten carbonate fuel cell, etc.), current state (e.g., temperature, pressure, humidity, etc.), and operating conditions (e.g., load demand, supply of hydrogen and oxygen, etc.) of the fuel cell 11. These factors directly affect the chemical reaction rate inside the fuel cell 11, thereby limiting the maximum power change rate that the fuel cell 11 can safely and stably achieve.

It can be seen that by setting the upper and lower saturation values for the power setpoint and limiting the rate of change with a ramp limit value, the fuel cell 11 can operate safely, efficiently, and stably.

It should be understood that the present disclosure does not limit the execution order of block 571 and block 572. That is, both blocks can be executed simultaneously or sequentially.

At block 580, the controller 60 transfers the power setpoint to the fuel cell 11, as the target output power of the fuel cell 11.

It should be understood that in the embodiment where the controller 60 is implemented with a multiplexer (see Figure 2A), the controller method according to the present disclosure can be implemented in a similar manner as described above, and therefore will not be repeated here.

### Fleet mode

Embodiments for the fleet mode are described below.

A fuel cell-based generation system operating in the fleet mode, as in the standalone mode (reference Figure 1), has a fuel cell subsystem comprising at least one fuel cell (11) coupled to a power terminal (101) which is configurable to connect with a power network. The fuel cell-based generation system had a battery subsystem (20) comprising at least one battery (21) coupled to the power terminal (101) and configured to provide a state of charge (SoC) value of the at least one battery. The at least one battery is capable of discharging to the power network (1000) and charging from the at least one fuel cell. The fuel cell-based generation system has a controller (60), generator-level controller, configured to operate the fuel cell-based generation system by coordinated control of the battery subsystem and the fuel cell subsystem with a power setpoint for the fuel cell subsystem. The power setpoint for the fuel cell subsystem is based on a reference power setpoint provided to the fuel cell-based generation system. The power network is connected with one or more such fuel cell-based generation.

The fuel cell-based generation system in the fleet mode, as in the standalone mode, has the controller (60) configured to provide the coordinated control of the fuel cell subsystem and the battery subsystem by dynamically adjusting the reference power setpoint to generate a power setpoint for the at least one fuel cell based on the SoC value of the at least one battery.

As in the standalone mode, the power setpoint of the at least one fuel cell comprised in the fuel cell-based generation system operating in the fleet mode, is adjusted by the controller (60) based on a comparison of the SoC value with an upper limit value or a lower limit value of a predetermined SoC range which is preconfigured based on the type of the at least one battery. Further, the controller is configured to, in the case that the SoC value is less than a lower limit value of a predetermined SoC range, adjust the power setpoint such that the at least one battery charges from the at least one fuel cell. Also, the controller (60) is configured to, in the case that the SoC value is greater than an upper limit value of a predetermined SoC range, adjust the power setpoint such that the at least one battery discharges to the power network. Further, the controller is configured to, in the case that the SoC value is within a predefined SoC range and the reference power setpoint has changed by at least a sensitivity threshold over a predetermined time period, adjust the power setpoint to the reference power setpoint.

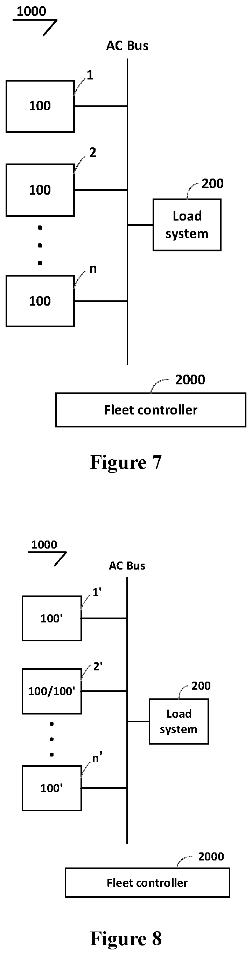

Figure 7 illustrates a fleet of fuel cell-based power generation systems (1000) connected in a power network according to an embodiment of the present disclosure.

With reference to Figure 7, a plurality of fuel cell-based power generation systems 1~n (henceforth also referred to as a fleet of fuel cell-based power generation systems when coordinated in operation with the help of a fleet controller (2000) are connected to the power network that is an AC bus. Each of these fuel cell-based power generation systems can be implemented by means of the aforementioned fuel cell-based power generation system 100. The load system 200 is also coupled to the power network. The fleet controller 2000 can determine a reference power setpoint for each of the fuel cell-based power generation systems 1~n.

The determination of the reference power setpoint is based on the load demand in the power network, which is influenced by load systems connected to it, including the load system 200 and potentially other load systems. The fleet controller can obtain the load demand information from the load systems (for e.g. from a power network controller managing the power network or by controllers associated with the load systems or by means of voltage and current transducers). The fleet controller 2000 can determine the reference power setpoints equally for all the contributing fuel cell-based generation systems, or the reference power setpoints may be different considering factors relating to individual fuel cell-based generation systems (e.g. aging in the fuel cell or/and battery subsystems, power/thermal efficiency or loss in a fuel cell subsystem etc.) or factors relating to the power network (for e.g. capacity of power lines in the power network, here AC bus) and then provides this reference power setpoint to a corresponding fuel cell-based power generation system. For example, the fleet controller 2000 sends a first reference power setpoint to the first fuel cell-based power generation system 1, and then the controller (generator-level controller) of the first fuel cell-based power generation system determines a power setpoint for its fuel cell subsystem based on the first reference power setpoint; the fleet controller 2000 sends a second reference power setpoint to the second fuel cell-based power generation system 2, and then the controller (generator-level controller) of the second fuel cell-based power generation system determines a power setpoint for its fuel cell subsystem based on the second reference power setpoint; ... the fleet controller 2000 sends an nth reference power setpoint to the nth fuel cell-based power generation system n, and then the controller (generator-level controller) of the nth fuel cell-based power generation system determines a power setpoint for its fuel cell subsystem based on the nth reference power setpoint.

The power generated in total by the fleet of fuel cell-based generation systems 1~n connected in the power network meets the load demand of the power network. That is to say, the reference power setpoint for a fuel cell-based generation system indicates the proportion of the load demand that this system is expected to contribute. In a case, where a fewer number of fuel cell-based generation systems are operated (for e.g. the fewer number selected based on factors mentioned earlier) from the fleet of fuel cell-based generation system 1~n connected in the power network by the fleet controller, the total power from the selected fuel cell-based generation systems in the fleet meets the load demand of the power network.

In the fleet, a fuel cell-based generation system operating as a part of the fleet, with the help of its controller (generator-level controller) generates a power setpoint for its fuel cell subsystem in consideration of the reference power setpoint received from the fleet controller and received SoC information from its battery subsystem. The received reference power setpoint is adjusted according to the received SoC information to generate a power setpoint for at least one fuel cell in the fuel cell subsystem to support charging and discharging of the battery subsystem as previously explained in the context of the standalone mode of operation. It should be noted that, in general, the descriptions provided for the standalone mode also apply to the fleet mode, with only the special features of the fleet mode being explained subsequently. In the fleet mode of operation, a separate power setpoint for the converter of the battery subsystem is derived from the received reference power setpoint. The separate power setpoint for the converter of the battery subsystem is used for power flow control (active power control) in the battery subsystem.

In an example, the fleet controller 2000 can be provided independently, in one of the fuel cell-based power generation system in the power network, or provided in a module or a system remote to the fuel cell-based power generation system or provided as a software module on a cloud server providing one or other services to the power network or the industrial application system comprising the power network, or comprised in a controller managing the power network. The fleet controller 2000 can communicate with the fuel cell-based power generation systems in a wired or wireless manner. Similarly, the generator-level controller can also be provided as a hardware controller in the fuel cell-based power generation system or can be provided as a software comprised in a cloud server or power network controller. The various possible ways of implementing the generator-level controller are already described in an earlier paragraph in the description of standalone operation of the fuel cell-based power generation system.

In an example, with reference to Figure 1 illustrating the block diagram of the fuel cell-based power generation system 100, each fuel cell-based power generation system in the fleet of fuel cell-based generation system 1000 is implemented by incorporating a DC-AC converter 30A and a DC-AC converter 40A. These DC-AC converters are capable of being operated in such a manner that they generate an AC output which matches the frequency, phase and the voltage of the power network (AC bus).

Figure 8 illustrates a fleet of fuel cell-based power generation systems connected in a power network according to another embodiment of the present disclosure.

With reference to Figure 8, a plurality of fuel cell-based power generation systems 1'~n' operated as a fleet of fuel cell-based generation systems 1000 are connected to the power network (AC bus). Each of these fuel cell-based power generation systems can be implemented by means of the aforementioned fuel cell-based power generation system 100'. The load system 200 is also coupled to the power network. The fleet controller 2000 can determine a reference power setpoint for each of the fuel cell-based power generation systems 1'~n' as described earlier.

In an example, with reference to Figure 3 illustrating the block diagram of the fuel cell-based power generation system 100', a fuel cell-based power generation system in the fleet of fuel-cell based power generation systems can be implemented by incorporating a DC-AC converter 70 connected to an internal DC bus coupling the fuel cell subsystem 10 and the battery subsystem 20. This DC-AC converter 70 is capable of being operated in such a manner that they generate an AC output that matches the frequency, phase and the voltage of the AC bus (AC bus power network).

In some other examples, the fleet of fuel cell-based power generation systems can include a combination of the system 100 and the system 100'. For example, as shown in Figure 8, some of the fuel cell-based power generation systems are implemented using the system 100, while others are implemented using the system 100'.

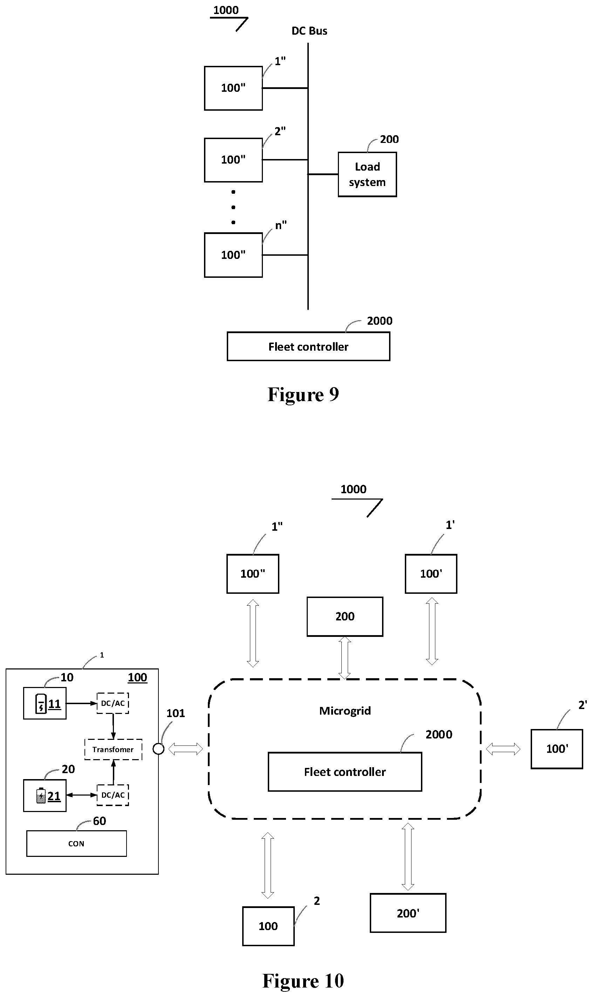

Figure 9 illustrates a fleet of fuel cell-based power generation systems connected in a power network according to yet another embodiment of the present disclosure.

With reference to Figure 9, a plurality of fuel cell-based power generation systems 1"~n" are provided for operation as a fleet of fuel cell-based power generation systems 1000. The fuel cell-based generation systems of the fleet are connected to a DC bus power network. Each of these fuel cell-based power generation systems connecting to the DC bus can be implemented by means of the aforementioned fuel cell-based power generation system 100". The load system 200 is also coupled to the DC bus power network. The fleet controller 2000 can determine a reference power setpoint for each of the fuel cell-based power generation systems 1"~n"coupled to the DC bus according to the description provided earlier.

Figure 10 illustrates a fleet of fuel cell-based power generation systems connected in a power network according to yet another embodiment of the present disclosure.

With reference to Figure 10, the power network is a microgrid that has plurality of fuel cell-based power generation systems operated as a fleet and serving the load systems connected to the microgrid. The fleet of fuel cell-based power generation systems can be connected as an AC fuel cell-based power generation system (for example, the configurations described earlier as 100, 100') or/and as a DC fuel cell-based power generation (for example 100'') in a DC microgrid or in a DC section of the microgrid. As a representative illustration, Figure 10 includes one or more combination of the system 100, the system 100' and the system 100" connected as power sources in the microgrid. The DC-AC converter included in the system 100 or the system 100' can be operated to generate an AC output that matches the frequency, phase and the voltage of the microgrid. The fleet controller 2000 can be included along with or comprised in a microgrid control system (not shown) of the microgrid. The microgrid in Figure 10 is representatively shown to be connected with the load system 200 and an additional load system 200'. The fleet controller 2000 provides each of the fuel cell-based power generation systems connected as a fleet in the microgrid with a reference power setpoint to meet the power demand by the load systems (200, 200') connected in the microgrid, wherein the determination of reference power setpoints and operation of a fuel cell-based power generation system in the fleet are already described in the earlier paragraphs.

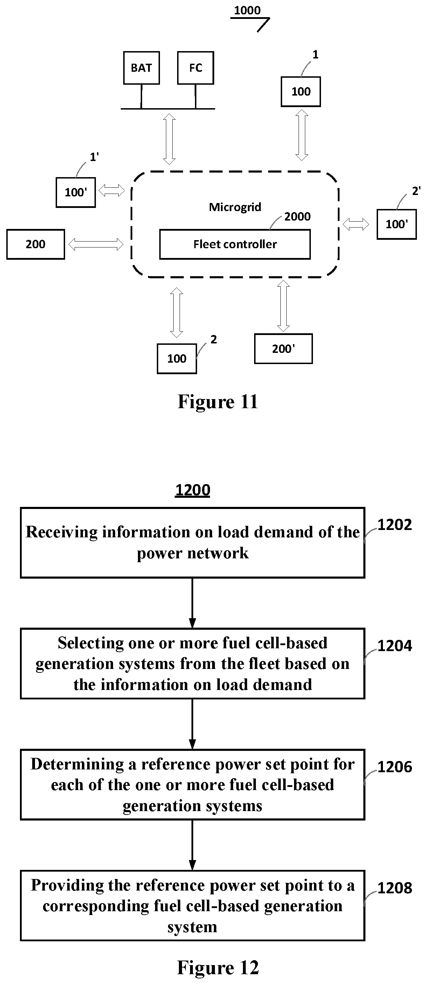

Figure 11 illustrates a fleet of fuel cell-based power generation systems connected in a power network according to yet another embodiment of the present disclosure.

With reference to Figure 11, the power network is a microgrid and shares most features with the implementation shown in Figure 10. However, in this illustration the fleet depicted in Figure 11 additionally comprises at least one of the following: a separate battery energy storage unit (labeled "BAT") and a separate fuel cell unit (labeled "FC"). One or more such units can be independently coupled in the microgrid and operated by the fleet controller 2000. Each unit, whether a battery or a fuel cell, can be connected directly at the DC section of the microgrid or connected via a DC-AC converter (not shown) in the AC section of the microgrid. This converter is operated to produce an AC output that matches the frequency, phase, and voltage at the AC section of the microgrid. The fleet may preferably include a pair of a fuel cell unit and a battery energy storage unit, and such pair can be operated with a virtual generator-level controller comprised in the fleet controller 2000. One or more such units can be coupled in the power network, providing greater flexibility in power supply, load response and storage of power in the battery energy storage units. The virtual generator-level controller coordinates with the local controllers of the fuel cell unit and the battery energy storage unit pair to operate the fuel cell unit to generate power according to the reference power setpoint and in accordance with the received SoC information from the battery energy storage unit. Here, the method of controlling the operation of the pair of the fuel cell unit and the battery energy storage unit is similar to that explained for a fuel cell-based power generation system. Also, the reference power setpoints for the fuel cell-based generators in the fleet is similar to that explained earlier for operating the fleet. The reference power setpoints for the pair of the fuel cell unit and the battery energy storage unit is generated similar to that for individual fuel cell-based generation systems in the fleet. If any of the individual units of fuel cell unit or battery energy storage unit are needed to be operated independently in the microgrid, the setpoints and the operation of the individual units can be controlled by the network controller (microgrid control system) in accordance to the needs in the microgrid as per the well-known techniques of controlling a power source and a battery energy storage systems in a power grid/microgrid.

In some other examples, the power network/microgrid includes at least one renewable power source, such as photovoltaic cells (PV cells), wind turbine generators (WTGs), or other independent fuel cell units (FCs) and these power sources and independent energy storage systems if any in the power network/microgrid can be operated by the power network controller. A fleet of fuel cell-based power generation system 1000 can be provided as a power source in the power network/microgrid. The fleet controller for the fleet of fuel cell-based power generation system 1000 can be incorporated into a power network controller. In a scenario where sufficient power is available through the renewable power sources connected in the power network, the power network controller may set the reference power setpoints for the fuel cell-based power generation systems such that the fuel cell subsystems do not provide power to the network or be operated to provide the balance power needed to fulfill the power demand in the power network. In such cases, the network controller comprising the fleet controller takes into account the available power in the power network from the renewable power sources or other power sources connected in the power network/microgrid and determines the reference power setpoints for the fleet according to the balance power requirements. In another exemplary embodiment, the converter coupling the battery subsystem is a bidirectional converter and can be configured to charge the battery through the power available in the power network/microgrid. The network controller comprising the fleet controller 2000 can coordinate with individual fuel cell-based generation system to operate the bidirectional converter coupling the battery subsystem to the power network to charge the battery subsystem from the power provided in the power network. Thus, the battery subsystem in each fuel cell-based generation system can be charged using power supplied by the renewable power source in the power network. This is especially useful in situations where excess power from the renewables can be stored in the battery subsystems, which function as storage elements. In this way, the fleet contributes to the power network by acting as a load/storage element instead of a source, adding more flexibility to the microgrid/power network. The fuel cell subsystems are only operated when the load demand cannot be met by the renewables in the microgrid/power network.

Figure 12 shows a method 1200 for controlling a fleet of fuel cell-based generation systems connected in a power network according to an embodiment of the present disclosure. The method 1200 can be executed by the fleet controller 2000. Below, the method 1200 is introduced by way of an example, where the fleet controller 2000 controls a fleet of fuel cell-based generation systems connected in the power network.

With reference to Figure 12, at block 1202, the fleet controller 2000 receives information on load demand of the power network. The information on load demand may include the demand power of the load system(s) connected to the power network, and the load demand of the power network can be equal to the sum of the demand power of these load system(s). The information on the load demand can include a load profile. The load profile can be expressed as a curve showing the change in load demand over time. From this load profile, the following information can be obtained: 1) the amount of change in the required power of the load system(s); 2) the frequency of change in the demand power; 3) the time period during which the demand power changes; and 4) the amount of power required for every load change over a given time period. Furthermore, based on the load profile, the fleet controller 2000 can predict the trend of change in the load demand over a time period in the future.

At block 1204, the fleet controller 2000 selects one or more fuel cell-based generation systems from the fleet based on the information on load demand. The selection is made so that each chosen system operates within a predefined high efficiency range, while minimizing the number of fuel cell-based generation systems needed to satisfy the load demand. This high efficiency range is established based on the characteristics of the fuel cell-based generation systems, which aims to maximize system efficiency. Operating outside this range, either at too low loads or too high loads, results in comparably reduced efficiency. Specifically, the high efficiency range may span from 50% to 90% of the maximum power that a fuel cell-based generation system can currently provide (i.e., its maximum available power).

It is noted that fewer fuel cell-based generation systems may be selected when load demand is low, while a greater number, or potentially all, of the systems in the fleet may be needed when load demand is high.

At block 1206, the fleet controller 2000 determines a reference power setpoint for each of the one or more fuel cell-based generation systems. The fleet controller, particularly when is provided along with or comprised in a network controller can consider further factors mentioned earlier to determine reference power setpoints for a fleet so that an optimization condition relating to fuel cell-based generation systems or the power network if any are met. The reference power setpoint for a fuel cell-based generation system indicates the proportion of the load demand that this system is expected to contribute The optimization condition may include one or more factors such that, when the one or more fuel cell-based generation systems share the load demand, total power losses in the one or more systems are minimized and/or the healthier fuel cell-based generation systems contribute more to the load demand than those that are less healthy. The health of each fuel cell-based generation system is obtained based on performance parameters, which include at least one of the following: the temperatures of the fuel cells or batteries, power losses in the fuel cells or batteries, and the state of charge (SoC) of the batteries. Additionally, the fleet controller 2000, particularly when provided along with or comprised in the network controller determines the reference power setpoint so that limiting conditions if any in the power network is met. The limiting condition may require that power flow between any section of the power network connected between the one or more fuel cell-based generation systems and one or more loads in the power network is within the power capacity of the power distribution lines in that section of the power network.

At block 1208, the fleet controller 2000 provides the reference power setpoint to a corresponding fuel cell-based generation system. In response to receiving the reference power setpoint, the controller (generator-level controller) of the corresponding fuel cell-based generation system determines a power setpoint for its fuel cell subsystem based on the reference power setpoint and the SoC value of its battery subsystem. The controller (generator-level controller) of the corresponding fuel cell-based generation system also derives a separate power setpoint from the received reference power setpoint for the converter associated with the battery subsystem to control the power flow in the fleet mode.

It is noted that in the fleet mode of operation, the power setpoint for the fuel cell subsystem is determined by using the method similarly described above. The difference in the standalone mode and the fleet mode is that, in the fleet mode of operation, the reference power setpoint is used in the similar manner as the demand power information gathered or determined in the standalone mode of operation.

It is noted that, in the fleet mode of operation, it can operate one or several fuel cell-based generation systems. That is to say, the number of fuel cell-based generation systems for operation can be changed.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein. All structural and functional equivalent transformations to the elements of the various aspects of the present disclosure, which are known or to be apparent to those skilled in the art, are intended to be covered by the claims.

## Claims

1. A fuel cell-based generation system (100, 100', 100") comprising:
a fuel cell subsystem (10) comprising at least one fuel cell (11) coupled to a power terminal (101) which is configurable to connect with a power network;
a battery subsystem (20) comprising at least one battery (21) coupled to the power terminal (101) and configured to provide a state of charge (SoC) value of the at least one battery, the at least one battery being capable of discharging to the power network and charging from the at least one fuel cell; and
a controller (60) configured to operate the fuel cell-based generation system by coordinated control of the battery subsystem and the fuel cell subsystem with a power setpoint for the fuel cell subsystem, wherein the power setpoint for the fuel cell subsystem is based on a reference power setpoint provided to the fuel cell-based generation system.

2. The fuel cell-based generation system (100, 100', 100") of claim 1, wherein the reference power setpoint is determined by a fleet controller (2000) which is remote to the fuel cell-based generation system and, optionally, is included in a network controller.

3. The fuel cell-based generation system (100, 100', 100") of claim 1, wherein the controller (60) is configured to provide the coordinated control of the fuel cell subsystem and the battery subsystem by dynamically adjusting the received reference power setpoint to generate a power setpoint for the at least one fuel cell based on the SoC value of the at least one battery.

4. The fuel cell-based generation system (100, 100', 100") of claim 3, wherein the controller is configured to adjust the power setpoint of the at least one fuel cell based on a comparison of the SoC value with an upper limit value or a lower limit value of a predetermined SoC range which is preconfigured based on the type of the at least one battery.

5. The fuel cell-based generation system (100, 100', 100") of claim 3, wherein the controller is configured to:
in the case that the SoC value is less than a lower limit value of a predetermined SoC range, adjust the power setpoint such that the at least one battery charges from the at least one fuel cell.

6. The fuel cell-based generation system (100, 100', 100") of claim 3, wherein the controller (60) is configured to:
in the case that the SoC value is greater than an upper limit value of a predetermined SoC range, adjust the power setpoints such that the at least one battery discharges to the power network.

7. The fuel cell-based generation system (100, 100', 100") of claim 3, wherein the controller is configured to, in the case that the SoC value is within a predefined SoC range and the reference power setpoint has changed by at least a sensitivity threshold over a predetermined time period, adjust the power setpoints to the reference power setpoint.

8. The fuel cell-based generation system (100, 100', 100") of claim 1, wherein the reference power setpoint is determined based on a power requirement value to meet the load demand of the power network.

9. A fleet of fuel cell-based generation systems (1000) coupled to a power network, comprising:
a plurality of fuel cell-based generation systems (1~n, 1'~n', 1"~n"), at least one fuel cell-based generation system comprising a fuel cell subsystem, a battery subsystem, and a controller, the fuel cell subsystem comprising at least one fuel cell coupled to a power terminal which is configurable to connect with the power network, the battery subsystem comprising at least one battery coupled to the power terminal and configured to provide a state of charge (SoC) value of the at least one battery, the at least one battery being capable of discharging to the power network and charging from the at least one fuel cell,
wherein the controller of the at least one fuel cell-based generation systems is configured to operate the fuel cell-based generation system by coordinated control of the battery subsystem and the fuel cell subsystem of the at least one fuel cell-based generation system with a power setpoint for the fuel cell subsystem, which is based on a reference power setpoint from a fleet controller (2000).

10. The fleet of fuel cell-based generation systems of claim 9, wherein a fuel cell-based generation system from the fleet of fuel cell-based generation systems, which comprises the battery subsystem and the fuel cell subsystem, is configured to be directly coupled to a DC bus or a DC section of the power network

11. The fleet of fuel cell-based generation systems of claim 9, wherein a fuel cell-based generation system from the fleet of fuel cell-based generation systems, which comprises the battery subsystem and the fuel cell subsystem, is configured to be coupled to the power network through at least one DC-AC converter that is coupled to an AC bus or an AC section of the power network

12. The fleet of fuel cell-based generation systems of claim 11, wherein the at least one DC-AC converter of the fuel cell-based generation system is configured to be operated to produce an AC output that follows the frequency, phase, and voltage of the power network.

13. The fleet of fuel cell-based generation systems of claim 9, wherein the fleet controller determines reference power setpoints for operating one or more fuel cell-based generation systems, such that each of the one or more fuel cell-based generation systems is loaded to operate at least in the range of 50%~90% of its maximum available power to meet the load demand in the power network.

14. The fleet of fuel cell-based generation systems of claim 9, wherein the fleet controller is included in a power network controller, and the reference power setpoints for operating one or more fuel cell-based generation systems are determined such that power flow in any section of the power network connected between the one or more fuel cell-based generation systems and one or more loads in the power network is within the power capacity of the power distribution lines in that section of the power network.

15. The fleet of fuel cell-based generation systems of claim 9, wherein the power network includes at least one renewable power source, and optionally, the fleet controller is included in a power network controller, and
wherein the reference power setpoints for one or more fuel cell-based generation systems are provided in such a way that all fuel cell subsystems in the one or more fuel cell-based generation systems are not operated to provide power to the power network, and the battery subsystem in each of the one or more fuel cell-based generation systems is charged from the power supplied by the at least one renewable power source.

16. The fleet of fuel cell-based generation systems of claim 9, wherein the fleet controller is configured to determine reference power setpoints for one or more fuel cell-based generation systems to meet the load demand of the power network, such that a healthier fuel cell-based generation system shares more of the load demand of the power network than the less healthy one, and
wherein the healthier fuel cell-based generation system is determined based on a performance parameter of each of the one or more fuel cell-based generation systems, and the performance parameter comprises at least one of the temperatures of the at least one fuel cell or the at least one battery, the power loss in the at least one fuel cell or the at least one battery, and the SoC of the at least one battery.

17. The fleet of fuel cell-based generation systems of claim 9, wherein the fleet of fuel cell-based generation systems comprises at least one of a separate battery energy storage unit and a separate fuel cell unit that are coupled to the power network and operated by the fleet controller.

18. The fleet of fuel cell-based generation systems of claim 17, wherein each of the separate battery energy storage unit and the separate fuel cell unit is coupled to the power network through a DC-AC converter that is operated to produce an AC output that follows the frequency, phase, and voltage of the power network.

19. The fleet of fuel cell-based generation systems of claim 9, wherein the power network is a microgrid.

20. The fleet of fuel cell-based generation systems of claim 9, wherein a converter coupled with the battery subsystem is operated with a separate power setpoint derived from the reference power setpoint.

21. A method for controlling a fleet of fuel cell-based generation systems coupled to a power network,
each fuel cell-based generation system comprising a fuel cell subsystem, a battery subsystem, and a controller associated with the fuel cell-based generation system, the fuel cell subsystem comprising at least one fuel cell coupled to a power terminal which is configurable to connect with the power network, the battery subsystem comprising at least one battery coupled to the power terminal and configured to provide a state of charge (SoC) value of the at least one battery, the at least one battery being capable of discharging to the power network and charging from the at least one fuel cell,
the method comprising the steps of
receiving information, by a fleet controller, on load demand for the power network; determining, by the fleet controller, a reference power setpoint for each of one or more fuel cell-based generation systems from the fleet of fuel cell-based generation systems to meet the load demand of the power network; and
providing, by the fleet controller, the reference power setpoint to a corresponding fuel cell-based generation system, such that the corresponding fuel cell-based generation system is operated based on the reference power setpoint.
